# EUROPÄISCHE PATENTSCHRIFT

(11) **EP 3 963 876 B1**
(45) Veröffentlichungstag und Bekanntmachung des Hinweises auf die Patenterteilung: **09.09.2026**
(21) Anmeldenummer: 20725101.8
(22) Anmeldetag: 30.04.2020
(51) Int. Cl.: G02B 6/34, G02B 6/42, H04N 23/51, G02B 5/18, G02B 27/42, G03B 17/04, G03B 17/17

(54) **ERFASSUNGSVORRICHTUNG MIT EINER BILDERFASSUNGSEINRICHTUNG UND EINEM TRÄGERMEDIUM SOWIE ERFASSUNGSSYSTEM MIT EINER DERARTIGEN ERFASSUNGSVORRICHTUNG UND EINEM GERÄT MIT EINEM BILDSCHIRM**
DETECTION DEVICE COMPRISING AN IMAGE CAPTURING DEVICE AND A CARRIER MEDIUM, AND DETECTION SYSTEM COMPRISING SUCH A DETECTION DEVICE AND A DEVICE WITH A SCREEN
ARRANGEMENT D'ACQUISITION COMPRENANT UN DISPOSITIF D'ACQUISITION D'IMAGES ET UN MILIEU PORTEUR AINSI QUE SYSTÈME D'ACQUISITION COMPRENANT UN TEL ARRANGEMENT D'ACQUISITION ET UN APPAREIL POURVU D'UN ÉCRAN D'AFFICHAGE

(30) Priorität: 03.05.2019 DE 102019206364
(43) Veröffentlichungstag der Anmeldung: 09.03.2022
(73) Patentinhaber: Audi AG, 85045 Ingolstadt (DE)
(72) Erfinder: KLUG, Markus, 85057 Ingolstadt (DE); MOLL, Tobias, 85055 Ingolstadt (DE); SCHEUCHENPFLUG, Johannes, 85107 Baar-Ebenhausen (DE)
(74) Vertreter: Hofstetter, Schurack & Partner
(86) Internationale Anmeldenummer: PCT/EP2020/062089
(87) Internationale Veröffentlichungsnummer: WO 2020/225109

(56) Entgegenhaltungen:
- US-A- 5 856 842
- ANONYMOUS: "Autofokus - Wikipedia", 8 July 2015 (2015-07-08), XP055307520, Retrieved from the Internet <URL:https://de.wikipedia.org/w/index.php?title=Autofokus&oldid=143858343> [retrieved on 20161004]

## Beschreibung

Die Erfindung betrifft ein Erfassungssystem mit einer Erfassungsvorrichtung sowie einem Gerät mit einem Bildschirm.

Ein Gerät mit einem Bildschirm, wie beispielsweise ein mobiles Endgerät, umfasst in der Regel eine fotographische und/oder videobasierte Erfassungsvorrichtung, wie beispielsweise eine Kameravorrichtung, um ein Abbild einer Umgebung des Geräts erzeugen und beispielsweise auf dem Bildschirm des Geräts anzeigen zu können. Um die Erfassungsvorrichtung in das Gerät zu integrieren, wird oftmals ein Kamerasensor auf einer Frontseite des Geräts positioniert, auf der aber außerdem der Bildschirm angeordnet ist. Hierdurch wird eine Fläche des Bildschirms flächenmäßig kleiner als eine Fläche der Frontseite des Geräts, da der Kamerasensor beispielsweise deutlich sichtbar im Bereich eines nicht von einem Bildanzeigebereich des Bildschirms umfassten Randes des Bildschirms positioniert sein muss. Durch diese Positionierung entsteht jedoch beispielsweise bei einer Videokonferenz mittels des mobilen Endgeräts für einen Benutzer der Eindruck, dass dieser, wenn er mittig auf den Bildschirm blickt, auf seinem Abbild nicht direkt in die Erfassungsvorrichtung, das heißt in den Kamerasensor des Geräts, blickt. Des Weiteren wird für die beschriebene Positionierung des Kamerasensors häufig ein kleiner Kamerasensor gewählt, um ein möglichst großen Anzeigebereich beibehalten zu können. Der kleine Kamerasensor weist zum Beispiel einen Durchmesser von lediglich 5 Millimetern auf. Eine Größe der nutzbaren Optik ist also limitiert, was zu einer eingeschränkten Bildqualität des mittels der Erfassungsvorrichtung aufgenommenen Abbilds führt. Denn zum einen sind bei einem kleinen Kamerasensor die Pixel kleiner, wodurch weniger Licht gesammelt werden kann. Zum anderen fällt die Optik entsprechend klein aus, wodurch die Schärfentiefe sehr hoch ausfällt (paralleler Strahlengang) und, da die Eintrittsöffnung so klein ist, weniger Licht eingefangen wird. Außerdem kann ein derart kleiner Kamerasensor leicht versehentlich von dem Benutzer verdeckt werden, beispielsweise mittels eines auf dem Kamerasensor platzierten Fingers des Benutzers. Des Weitern kann der kleine Kamerasensor im Falle von Verschmutzungen leicht vollständig verschmutzt und somit verdeckt sein.

Aus dem Stand der Technik sind optische Beugungsgitter bekannt, die holographisch hergestellt werden und daher als holografische Gitter bezeichnet werden. Diesbezüglich ist aus der wissenschaftlichen Veröffentlichung "Volume-phase holographic gratings and their potential for astronomical applications" (S. C. Barden, J. A. Arns und W. S. Colburn, Proceedings SPIE 3355, Optical Astronomical Instrumentation, 1998) bekannt, dass Licht, das auf ein derartiges holografisches Gitter in einem Winkel trifft, der deutlich außerhalb des Winkelbereichs liegt, der die Bragg-Bedingung erfüllt, ungebeugt das holografische Gitter passiert. Trifft jedoch Licht aus einem Winkel auf das holografische Gitter, sodass die Bragg-Bedingung zumindest in etwa erfüllt ist, wird das Licht in einem Winkel gebeugt. Ein ähnliches Verhalten zeigt sich bezüglich einer Wellenlängenabhängigkeit des Einflusses des holografischen Gitters auf Licht. Denn Licht mit einer Wellenlänge, die deutlich außerhalb des Wellenlängenbereichs liegt, der durch die Bragg-Bedingung als sogenannte Bragg-Wellenlänge vorgegeben wird, passiert ebenfalls das holografische Gitter ohne gebeugt zu werden und lediglich Licht mit einer Wellenlänge, die die Bragg-Bedingung zumindest in etwa erfüllt, wird am holografischen Gitter gebeugt. Mittels komplexer holografischer Gitterstrukturen ist es somit beispielsweise möglich, dass Licht mit zwei verschiedenen Wellenlängenbereichen in jeweils demselben Winkel gebeugt wird. Außerdem kann durch ein holografisches Gitter beispielsweise Licht mit verschiedenen Wellenlängen in verschiedene Lichtwege aufgeteilt werden, sodass mithilfe eines holografischen Gitters ein dispersiver Strahlteiler realisiert werden kann.

Die US 5,856,842 A zeigt eine Vorrichtung zum Erfassen eines frontalen Gesichtsbildes einer Person mit einem lichtleitenden Wellenleiter, der das Bild von einem ersten lichtlenkenden Bereich zu einem zweiten lichtlenkenden Bereich überträgt, um das Bild auszugeben. Zumindest ein Eingangsbereich für den Wellenleiter ist ein holographisch abgeleitetes optisches Gitter.

Es ist die Aufgabe der Erfindung, eine Lösung bereitzustellen, mittels der eine unscheinbare fotographische und/oder videobasierte Erfassungsvorrichtung für ein Gerät mit einem Bildschirm bereitgestellt wird.

Die Aufgabe wird durch den Gegenstand des unabhängigen Patentanspruchs gelöst. Vorteilhafte Weiterbildungen der Erfindung sind durch die abhängigen Patentansprüche, die folgende Beschreibung sowie die Figuren offenbart.

Die vom erfindungsgemäßen Erfassungssystem umfasste Erfassungsvorrichtung umfasst eine Bilderfassungseinrichtung sowie ein Trägermedium. Das Trägermedium dient als Deckplatte für einen Bildschirm und ist beispielsweise als Platte aus transparentem Kunststoff oder Glas realisiert, wobei das Trägermedium zusätzlich Licht aus der Umgebung an die Bilderfassungseinrichtung weiterleitet. Das Trägermedium ist somit als Lichtleiter ausgebildet, das heißt das Trägermedium stellt ein Lichtleitmedium dar. Das heißt, das Trägermedium kann Licht, welches in das Trägermedium eingekoppelt ist, mittels interner Reflexion, bevorzugt Totalreflexion, an die Bilderfassungseinrichtung weiterleiten. Die Bilderfassungseinrichtung kann dann das weitergeleitete Licht, wenn es wieder aus dem Trägermedium ausgekoppelt ist, erfassen und daraus Bilddaten erzeugen oder generieren. Bevorzugt kann die Bilderfassungseinrichtung als Bildsensor oder Kamera, jeweils mit oder ohne abbildende Optik (wie zum Beispiel einer Linse oder einem Linsensystem) realisiert sein. Die Bilderfassungseinrichtung ist also zum Erzeugen eines Abbilds einer Umgebung ausgelegt. Die Erfassungsvorrichtung im Sinne der Erfindung ist also insgesamt eine Vorrichtung zum Aufzeichnen statischer oder bewegter Bilder, die ein Abbild der Umgebung der Erfassungsvorrichtung darstellen. Das hierfür benötigte Licht wird an einer Oberfläche eines Bildschirms mittels eines als Deckplatte ausgebildeten, lichtleitenden Trägermediums erfasst oder eingefangen.

Zum Einkoppeln oder Auskoppeln des Lichts sind an dem Trägermedium ein Einkoppelbereich und ein Auskoppelbereich angeordnet. Das Trägermedium mit dem Einkoppelbereich und dem Auskoppelbereich sind zusammen als die Deckplatte für einen Bildanzeigebereich des besagten Bildschirms ausgebildet. Diese drei Komponenten der Erfassungseinrichtung sind also dazu ausgelegt, auf dem Bildanzeigebereich des Bildschirms positioniert zu sein, wobei es sich hierbei beispielsweise um eine Oberfläche eines berührungssensitiven Bildschirms eines mobilen Endgeräts, wie einem Smartphone, handeln kann. **In** diesem Beispiel bildet das Trägermedium mit dem Einkoppelbereich also eine Deckplatte für eine Frontseite des Smartphones, auf der der Bildanzeigebereich des Bildschirms des Smartphones angeordnet ist.

Der Einkoppelbereich umfasst zumindest denjenigen Teilbereich einer Oberfläche der Deckplatte, der zum Abdecken des Bildanzeigebereichs ausgebildet ist. Bei eine Positionierung der Erfassungsvorrichtung in der bevorzugten Einbaulage, das heißt auf dem Bildanzeigebereich des Bildschirms, ist der Einkoppelbereich auf einer vom Bildschirm abgewandten Seite der Deckplatte bevorzugt parallel zu einer Ebene des Bildanzeigebereichs angeordnet . Der Einkoppelbereich ist als holografisches Element mit einer ersten Ablenkstruktur ausgebildet. Eine Beschreibung einer Funktionsweise eines derartigen holografischen Elements, das häufig als optisches Gitter bezeichnet wird und das mittels holografischer Methoden hergestellt werden kann, findet sich beispielsweise in der oben zitierten wissenschaftlichen Publikation. Der Einkoppelbereich kann entsprechend zum Beispiel als Beugungsgitter realisiert sein. Die erste Ablenkstruktur des Einkoppelbereichs ist dazu ausgebildet, Licht, das aus der Umgebung auf die erste Ablenkstruktur fällt, in das Trägermedium einzukoppeln und dabei derart weit oder stark umzulenken, dass das eingekoppelte Licht die Grenzwinkelbedingung erfüllt.

Das Trägermedium ist entsprechend dazu ausgebildet, das eingekoppelte Licht dann mittels der sich ergebenden internen Reflexion von dem Einkoppelbereich an den Auskoppelbereich zu übertragen. Das Licht, das aus der Umgebung auf die erste Ablenkstruktur fällt und in das Trägermedium eingekoppelt wird, kann hierbei in zick-zack-artigen Bewegungen entlang einer Richtung parallel zu einer Ebene der Oberfläche des Bildanzeigebereichs des Bildschirms geleitet werden. Voraussetzung hierfür ist, dass die Erfassungsvorrichtung in der bevorzugten Einbaulage angeordnet ist, das heißt auf dem Bildanzeigebereich des Bildschirms positioniert ist. Schließlich weist der Auskoppelbereich, der ebenfalls als holografisches Element ausgebildet ist, eine zweite Ablenkstruktur auf, die dazu ausgebildet ist, das in dem Trägermedium übertragene Licht, das auf die zweite Ablenkstruktur fällt, aus dem Trägermedium auszukoppeln. Die zweite Ablenkstruktur des Auskoppelbereichs kann beispielsweise ebenfalls als Beugungsgitter realisiert sein.

Mit anderen Worten kann insgesamt das Licht aus der Umgebung an der ersten Ablenkstruktur des Einkoppelbereichs abgelenkt oder gebeugt und in das Trägermedium eingekoppelt werden. Entsprechend kann das von dem Trägermedium übertragene Licht an der zweiten Ablenkstruktur abgelenkt oder gebeugt und dort wieder aus dem Trägermedium ausgekoppelt werden. Somit kann das Licht vor oder an dem Bildanzeigebereich des Bildschirms eines Geräts erfasst oder abgegriffen werden.

Zum Erfassen des aus dem Trägermedium ausgekoppelten Lichts, liegt die Bilderfassungseinrichtung an dem Auskoppelbereich an. Wie oben beschrieben ist die Bilderfassungseinrichtung dazu ausgebildet, das aus dem Trägermedium ausgekoppelte Licht zu erfassen und in Form von Bilddaten bereitzustellen. Die Bilddaten sind dabei mit dem einfallenden Licht der Umgebung korreliert. Zum Befestigen der Bilderfassungseinrichtung an dem Trägermedium kann die Bilderfassungseinrichtung beispielsweise an das Trägermedium angeklebt werden. Alternativ kann auch das Trägermedium in eine Halteeinrichtung der Bilderfassungseinrichtung eingespannt werden. Die Bilderfassungseinrichtung kann insbesondere als Bildsensor, beispielsweise als CCD-Sensor (Charged Coupled Device - ladungsgekoppelte Vorrichtung) oder als CMOS-Sensor (Complementary Metal Oxide Semiconductor - komplementärer Metalloxid-Halbleiter), ausgebildet sein. Bei dieser Ausgestaltung der Bilderfassungseinrichtung als Bildsensor kann das Trägermedium, an welchem der Einkoppelbereich und der Auskoppelbereich angeordnet sind, zusätzlich die Aufgabe eines Objektivs, also einer abbildenden Optik, übernehmen. Alternativ kann die Bilderfassungseinrichtung auch als Kamera oder Fotoapparat, insbesondere als Mikrokamera, wie sie beispielsweise in einem Smartphone ausgebildet ist, mit eigener abbildender Optik realisiert sein.

Der gesamte Einkoppelbereich der Erfassungsvorrichtung dient also als Erfassungsbereich für das Licht, das letztendlich an die Bilderfassungseinrichtung weitergeleitet und dort als mit dem Licht korrelierte Bilddaten bereitgestellt wird. Der Einkoppelbereich bildet folglich eine Art Kameraobjektiv oder Lichteinlass für die Bilderfassungseinrichtung. Der Einkoppelbereich umfasst daher bevorzugt eine gesamte Seite der Deckplatte, und zwar die in der bevorzugten Einbaulage vom Bildschirm abgewandte Seite der Deckplatte. Hierdurch ergibt sich der Vorteil, dass der Erfassungsbereich der Erfassungsvorrichtung die gesamte Seite der Deckplatte umfasst. Hierdurch wird ein beispielsweise im Randbereich des berührungssensitiven Bildschirms des Smartphones angeordneter Kamerasensor überflüssig, da die Deckplatte des Smartphones selbst als Kamerasensor dienen kann, falls als Deckplatte des Smartphones die oben beschriebene Deckplatte der Erfassungsvorrichtung verwendet wird.

Indem nur eine einzelne Bilderfassungseinrichtung, zum Beispiel ein einzelner Kamerasensor, zum Erfassen des Bilds nötig ist, wird zudem weniger Rechenleistung benötigt und der Fertigungsaufwand zum Herstellen der Erfassungseinrichtung ist geringer als beispielsweise der Fertigungsaufwand für herkömmliche Kameravorrichtungen.

Die beschriebene Erfassungsvorrichtung ermöglicht insgesamt, dass der Erfassungsbereich, das heißt der Einkoppelbereich, auf dem Bildanzeigebereichs des Bildschirms positionierbar ist, sodass letztendlich mittels der Bilderfassungseinrichtung die mit dem auf den Bereich des Bildanzeigebereichs aufgetroffenen Licht korrelierten Bilddaten bereitgestellt werden. Hierdurch entfallen einerseits störende Elemente auf dem Bildanzeigebereich, da die Deckplatte derart ausgestaltet wird, dass diese den Bildanzeigebereich vollständig umfassen kann, sodass im Bildanzeigebereich des Bildschirms keine Aussparung mehr für den Kamerasensor angeordnet ist, wie es beispielsweise bei herkömmlichen Smartphones der Fall ist. Durch die dadurch bewirkte Vergrößerung des Erfassungsbereichs auf die gesamte Fläche der Deckplatte wird außerdem eine Verdeckung oder zumindest eine Abschattung des Erfassungsbereichs, beispielsweise durch eine ungünstig gewählte Positionierung des Fingers des Benutzers, unwahrscheinlich, da auf einer größeren Fläche Licht für die gewünschte Abbildung aufgenommen wird als bei dem oben beschriebenen herkömmlichen Kamerasensor. Außerdem können zusätzliche optische Elemente, wie der im Smartphone verbaute Kamerasensor entfallen, wodurch Kosten reduziert, ein Gewicht des Endprodukts, das heißt des mobilen Endgeräts mit integrierter Erfassungsvorrichtung, reduziert und zudem eine Komplexität der Kameravorrichtung, die in das mobile Endgerät integriert ist, reduziert wird. All dies ist möglich, da eine Deckplatte für den Bildanzeigebereich des Bildschirms zusätzlich zu ihrer Abdeckfunktion als Erfassungsbereich für eine Erfassungsvorrichtung ausgebildet ist. Hierdurch wird die eigentliche Kameravorrichtung für den Benutzer scheinbar unsichtbar, da anstelle eines herkömmlichen Kamerasensors einer Kameravorrichtung lediglich das Trägermedium mit dem Einkoppelbereich sowie dem Auskoppelbereich, die insgesamt als beispielsweise lichtdurchlässige Deckplatte ausgebildet sind, für den Benutzer zu sehen sind, wenn dieser auf den Bildanzeigebereich des Bildschirms blickt. Die Erfassungsvorrichtung ist folglich besonders unscheinbar.

Zu der Erfindung gehören auch Ausgestaltungsformen, durch die sich zusätzliche Vorteile ergeben.

Eine Ausgestaltungsform sieht vor, dass der Einkoppelbereich und der Auskoppelbereich als Ablenkstruktur zumindest ein optisches Gitter, insbesondere ein holografisches Oberflächengitter oder ein holografisches Volumengitter, aufweisen. In diesem Zusammenhang kann die Erfassungsvorrichtung auch als HoloCam, kurz für holografische Kamera, bezeichnet werden.

Ein optisches Gitter, auch Beugungsgitter genannt, sowie dessen Wirkungsweise und Herstellungsverfahren ist, wie bereits erwähnt, allgemein bekannt, wie es beispielsweise aus der oben zitierten wissenschaftlichen Publikation hervorgeht. Grundsätzlich kann ein optisches Gitter auf zumindest abschnittsweise periodischen Strukturen, einer sogenannten Gitterstruktur, in einem Substrat beruhen. Mittels einer solchen Gitterstruktur kann ein optisches Gitter durch den physikalischen Effekt der Beugung eine Lichtlenkung, wie sie zum Beispiel von Spiegeln, Linsen oder Prismen bekannt ist, herbeiführen. Fällt Licht, das heißt fallen Lichtstrahlen auf das optische Gitter, wobei die einfallenden Lichtstrahlen insbesondere die Bragg-Gleichung erfüllen, werden die Lichtstrahlen durch das optische Gitter gebeugt oder abgelenkt. Die Lichtlenkung kann somit insbesondere durch Interferenzerscheinungen der durch das optische Gitter gebeugten Lichtstrahlen erfolgen. Die Ablenkstruktur des Einkoppelbereichs oder Auskoppelbereichs kann dementsprechend auch als Beugungsstruktur bezeichnet werden.

Vorzugsweise kann ein optisches Gitter gegenüber dem einfallenden Licht richtungsselektiv oder winkelselektiv ausgebildet sein. Somit kann nur Licht, insbesondere ein Anteil des Lichts, das aus einer vorbestimmten Einfallsrichtung, zum Beispiel in einem vorbestimmten Winkel, auf ein optisches Gitter fällt, abgelenkt werden. Licht, insbesondere ein Anteil des Lichts, das aus einer anderen Richtung auf das optische Gitter fällt, wird vorzugsweise nicht abgelenkt oder umso weniger, je größer der Unterschied zur vorbestimmten Einfallsrichtung ist. Der Lichtanteil, welcher von der vorbestimmten Einfallsrichtung oder Optimaleinfallsrichtung abweicht, kann folglich vorzugsweise ungehindert durch das Substrat mit dem optischen Gitter propagieren.

Zusätzlich oder alternativ kann ein optisches Gitter noch wellenlängenselektiv oder frequenzselektiv ausgebildet sein. Somit kann nur Licht, insbesondere ein erster Anteil des Lichts mit einer vorbestimmten Wellenlänge von dem optischen Gitter in einem bestimmten Beugungswinkel abgelenkt oder gebeugt werden. Licht, insbesondere ein zweiter Anteil des Lichts mit einer anderen als der vorbestimmten Wellenlänge wird vorzugsweise nicht abgelenkt, oder umso weniger je größer der Unterschied zur vorbestimmten Wellenlänge ist. Der zweite Lichtanteil, welcher von der vorbestimmten Wellenlänge oder Optimalwellenlänge abweicht, kann folglich vorzugsweise ungehindert durch das Substrat mit dem optischen Gitter propagieren. Dadurch kann beispielsweise von polychromatischem Licht, welches auf das optische Gitter trifft, wenigstens ein monochromatischer Lichtanteil abgespaltet werden. In vorteilhafter Weise ist der Ablenkeffekt für die Optimalwellenlänge maximal und fällt zu längeren und kürzeren Wellenlängen hin, beispielsweise gemäß einer Gaußglocke, ab oder wird schwächer. Insbesondere wirkt der Ablenkeffekt nur auf einen Bruchteil des sichtbaren Lichtspektrums und/oder in einem Winkelbereich kleiner als 90 Grad.

Eine Herstellung eines optischen Gitters kann insbesondere mittels Belichtung eines Substrats, also beispielsweise fotolithografisch oder holografisch, erfolgen. In diesem Zusammenhang kann das optische Gitter dann auch als holografisches oder holografisch-optisches Gitter bezeichnet werden. Es sind zwei Arten von holografisch-optischen Gittern bekannt: holografische Oberflächengitter (surface holografic gratings, kurz: SHG) und holografische Volumengitter (volume holografic gratings, kurz: VHG). Bei einem holografischen Oberflächengitter kann die Gitterstruktur durch optisches Verformen einer Oberflächenstruktur des Substrats erzeugt werden. Durch die veränderte Oberflächenstruktur kann auftreffendes Licht abgelenkt, zum Beispiel reflektiert werden. Beispiele für holografische Oberflächengitter sind sogenannte Sägezahn- oder Blazegitter. Im Gegensatz dazu kann die Gitterstruktur bei holografischen Volumengittern in das ganze Volumen oder einen Teilbereich des Volumens des Substrats eingearbeitet sein. Holografische Oberflächengitter und holografische Volumengitter sind in der Regel frequenzselektiv. Es sind jedoch auch optische Gitter bekannt die polychromatisches Licht beugen können. Diese werden als holografische Mehrfachvolumengitter (multiplexed volume holografic gratings, kurz: MVHG) bezeichnet und können beispielsweise durch Verändern der Periodizität der Gitterstruktur eines optischen Gitters oder durch Anordnen mehrerer holografisches Volumengitter hintereinander hergestellt werden.

Als Material für das besagte Substrat zum Einarbeiten eines optischen Gitters eignet sich besonders ein Polymer, insbesondere ein Fotopolymer, oder eine Folie, insbesondere eine fotosensitive Folie, zum Beispiel aus Kunststoff oder organischen Stoffen. Substrate die eine Ablenkstruktur zum Beugen von Licht, beispielsweise in Form eines optischen Gitters aufweisen, können auch als holografisch-optische Elemente (HOE) bezeichnet werden.

Durch die beschriebene Ausbildung des Einkoppelbereichs und des Auskoppelbereichs wird daher das Beugen des auf den Einkoppelbereich fallenden Lichts zur beispielsweise seitlich an der Deckplatte angeordneten Bilderfassungseinrichtung möglich, wodurch die Deckplatte der Erfassungsvorrichtung derart gestaltet sein kann, dass die Bilderfassungseinrichtung in der bevorzugten Einbaulage der Erfassungsvorrichtung den Bildanzeigebereich des Bildschirms überhaupt nicht , das heißt auch nicht teilweise, abdeckt.

Eine weitere Ausgestaltungsform sieht vor, dass der Einkoppelbereich und der Auskoppelbereich einstückig mit dem Trägermedium ausgebildet sind oder das Trägermedium als separates Element zu dem Einkoppelbereich und dem Auskoppelbereich ausgebildet ist.

Im ersten Fall können der Einkoppelbereich und der Auskoppelbereich somit beispielsweise direkt in eine Oberfläche des Trägermediums eingearbeitet sein. Das heißt, die Ablenkstruktur kann beispielsweise in die Oberfläche des Trägermediums (Deckplattenoberfläche) geätzt oder gelasert sein. Somit kann das Trägermedium selbst als HOE ausgebildet sein. Im zweiten Fall können Einkoppelbereich, Auskoppelbereich und Trägermedium separat ausgebildet sein. Dabei können der Einkoppelbereich und der Auskoppelbereich beispielsweise wenigstens ein erstes Element bilden und das Trägermedium kann ein zweites Element bilden, welches an dem ersten Element anliegt. Somit können der Einkoppelbereich und der Auskoppelbereich in wenigstens einem HOE ausgebildet sein. Beispielsweise können der Einkoppelbereich und der Auskoppelbereich in unterschiedlichen Abschnitten einer holografischen Folie oder Platte ausgebildet sein. Zum Befestigen der Folie oder Platte an dem Trägermedium kann die Folie oder Platte an das Trägermedium angeklebt sein. Alternativ kann die holografische Folie auch als Adhäsionsfolie ausgebildet sein und direkt, also ohne Klebstoff, durch molekulare Kräfte an der Oberfläche des Trägermediums haften. Die Deckplatte ist somit auf verschiedene Arten und insbesondere kostengünstig herstellbar.

In einer bevorzugten Ausgestaltungsform der Erfindung ist es vorgesehen, dass die Deckplatte biegbar ausgebildet ist. Die Deckplatte kann also zerstörungsfrei verformt werden, wobei das zerstörungsfreie Verformen bei einem Verbiegen der Deckplatte um einen Biegeradius von kleiner als 2 Zentimetern der Fall ist. Die Deckplatte kann somit beispielsweise Randbereiche aufweisen, in denen die Deckplatte um einen Winkel von beispielsweise 90 Grad abgeknickt ist. Über die abgeknickten Randbereichen kann sich beispielsweise ebenfalls der Einkoppelbereich erstrecken, sodass dort einfallendes Licht zur Bilderfassungseinrichtung geleitet und folglich abgebildet wird. Hierdurch werden multifunktionale Deckplatten beispielsweise für elektrische Geräte, die einen entsprechend gebogen geformten Bildschirm aufweisen, möglich, wobei der Einkoppelbereich derart positionierbar ist, dass aus mehreren Perspektiven, beispielsweise von mehreren Seiten des Geräts aus, Bilder aufgenommen werden können. Hierdurch ist die Erfassungsvorrichtung kompatibel für verschiedenartig ausgebildete Bildschirme mit verschiedenartig ausgeformten Bildanzeigebereichen ausgebildet.

Eine andere Ausgestaltungsform sieht vor, dass die Bilderfassungseinrichtung dazu ausgelegt ist, eine Autofokusfunktion mittels einer Kantenkontrastmessung durchzuführen. Eine Kantenkontrastmessung bezeichnete eine Möglichkeit zum automatischen Fokussieren auf ein Objekt in der Umgebung, aus der Licht von der Erfassungsvorrichtung aufgenommen wird, mittels einer Kontrastmessung an Konturkanten, die in den bereitgestellten Bilddaten beispielsweise mittels Anwenden von Methoden digitaler Bildverarbeitung, erkannt werden. Eine derartige Kantenkontrastmessung ist bei geeigneter Wahl des HOE sowie der Bilderfassungseinrichtung realisierbar. Dies ermöglicht, dass mit der Erfassungsvorrichtung ein scharfes Abbild eines Objekts in der Umgebung ermöglicht wird.

Erfindungsgemäß ist außerdem ein Erfassungssystem vorgesehen. Dieses Erfassungssystem umfasst eine Erfassungsvorrichtung, wie sie oben beschrieben wurde, sowie ein Gerät mit einem Bildschirm. Bei diesem Gerät handelt es sich beispielsweise um ein mobiles Endgerät, wie beispielsweise ein Smartphone, ein Tablet, ein Fernsehgerät oder einen Computerbildschirm. Die Erfassungsvorrichtung ist hierbei als Deckplatte für den Bildschirm des Geräts ausgebildet, das heißt die Erfassungsvorrichtung stellt die Deckplatte für den Bildschirm bereit. Dieser Bildschirm umfasst einen Bildanzeigebereich, der bevorzugt den gesamten Bildschirm einnimmt. Die Deckplatte dient nun beispielsweise als Schutzplatte für diesen Bildanzeigebereich und umfasst auf einer dem Bildschirm abgewandten Oberfläche der Deckplatte den Einkoppelbereich. Folglich wird bevorzugt über die gesamte Oberfläche der Deckplatte, die auf dem Bildschirm angeordnet ist, Licht in die Erfassungsvorrichtung eingekoppelt, sodass der Erfassungsbereich der Erfassungsvorrichtung die gesamte Bildschirmfläche umfasst. Die im Zusammenhang mit der erfindungsgemäßen Erfassungsvorrichtung vorgestellten bevorzugten Ausgestaltungsformen und deren Vorteile gelten entsprechend, soweit anwendbar, für das erfindungsgemäße Erfassungssystem. Aus diesem Grund sind die entsprechenden Ausgestaltungsformen des erfindungsgemäßen Erfassungssystems hier nicht noch einmal beschrieben.

In einer vorteilhaften Ausgestaltungsform des Erfassungssystems ist die Bilderfassungseinrichtung der Erfassungsvorrichtung an einer von folgenden Positionen angeordnet: In einem Rahmen des Bildschirms des Geräts, in einer Aussparung in einem Randbereich des Bildschirms des Geräts, an einer seitlichen Wand der Deckplatte, wobei die seitliche Wand senkrecht zum Einkoppelbereich angeordnet ist, im Bildschirm des Geräts. Ist das Gerät beispielsweise als mobiles Endgerät ausgebildet, auf dessen Frontseite der Anzeigebereich des Bildschirms angeordnet ist, kann in einem Rahmen dieses Bildanzeigebereichs des Bildschirms ein oder mehrere Sensoren angeordnet sein, die jeweils von der Bilderfassungseinrichtung umfasst werden. Mehrere derartige Sensoren sind beispielsweise sinnvoll, wenn aufgrund der wellenlängenabhängigen Beugung des auf den Einkoppelbereich treffenden Lichts an verschiedenen Positionen positionierte Sensoren der Bilderfassungseinrichtung vorgesehen sind, die jeweils Licht verschiedener Wellenlängen und folglich Licht verschiedener Farbbereiche erfassen können. Eine Auswerteeinrichtung der Bilderfassungseinrichtung wird aus dem von den verschiedenen Sensoren erfassten Licht die entsprechenden Bilddaten, die mit dem erfassten Licht korrelieren, bereitstellen. Hierfür kann beispielsweise ein 1 Millimeter bis zu 1 Zentimeter breiter Rand beziehungsweise Rahmen des Bildschirms vorgesehen sein. Alternativ oder zusätzlich dazu kann die Bilderfassungseinrichtung in einer Aussparung in einem Randbereich des Bildschirms angeordnet sein. Diese Aussparung kann beispielsweise in einem Eck des Bildschirms positioniert sein. Allerdings muss ein Betrachter, der beispielsweise ein Foto von sich mit der Erfassungsvorrichtung machen möchte, nicht zu dieser Aussparung im Randbereich blicken, um ein Foto von sich zu machen, auf dem er direkt in die Bilderfassungseinrichtung blickt, sondern kann beispielsweise mittig auf den Bildschirm schauen, wobei dennoch die Bilddaten ein Abbild dieser Person zeigen, auf dem diese direkt auf die Bilderfassungseinrichtung blickt. Dies ist möglich, da das Licht zunächst vom Einkoppelbereich durch das Trägermedium zum Auskoppelbereich übertragen wird und nicht von der Bilderfassungseinrichtung selbst aufgenommen wird.

Alternativ oder zusätzlich dazu kann die Bilderfassungseinrichtung seitlich am Trägermedium angeordnet sein. Für einen Benutzer, der auf die Deckplatte blickt und durch die Deckplatte hindurch auf den Bildanzeigebereich des Bildschirms des Geräts blickt, ist die Bilderfassungseinrichtung dann beispielsweise überhaupt nicht zusehen. Die Bilderfassungseinrichtung kann alternativ oder zusätzlich dazu im Bildschirm des Geräts selbst angeordnet sein, beispielsweise in dem häufig als Display bezeichneten Bildanzeigebereich. Es gibt folglich verschiedene Möglichkeiten, wie die Bilderfassungseinrichtung in das Erfassungssystem integriert sein kann. Insgesamt ist es also möglich, die Bilderfassungseinrichtung derart zu positionieren, dass diese unscheinbar, das heißt unsichtbar für den Benutzer, ist, da sie nicht auf der Deckplatte beziehungsweise in einer Aussparung der Deckplatte angeordnet sein muss.

Es ist vorgesehen, dass die Erfassungsvorrichtung und/oder das Gerät eine Lichtquelle umfasst, die dazu ausgelegt ist, ein vorgegebenes Lichtmuster an die Umgebung auszusenden. Bei diesem vorgegebenen Lichtmuster kann es sich beispielsweise um mehrere mit einem vorgegebenen Abstand zueinander angeordnete Lichtstreifen handeln. Die Bilderfassungseinrichtung ist nun dazu ausgelegt, basierend auf dem erfassten in der Umgebung reflektierten Lichtmuster eine Autofokusfunktion durchzuführen. Hierbei wird das von der Lichtquelle ausgehende Lichtmuster durch einen Lichtmustereinkoppelbereich in das Trägermedium eingekoppelt, mittels interner Reflexion durch das Trägermedium geleitet und in einem Lichtmusterauskoppelbereich in die Umgebung austreten gelassen. Diese Lichtquelle, die durch das HOE hindurchgeleitet wird, sendet bevorzugt Infrarotlicht aus. Dieses Intrarotlicht wird in Form eines vorgegebenen Lichtmusters, das heißt als sogenanntes Structured Light, emittiert, mithilfe dessen die Autofokusfunktion durchgeführt wird. Hierbei handelt es sich um eine gängige Methode zum automatischen Fokussieren. Der Lichtmustereinkoppelbereich kann hierbei dem Auskoppelbereich entsprechen und der Lichtmusterauskoppelbereich dem Einkoppelbereich. Allerdings ist dies nur dann der Fall, wenn die Lichtquelle entsprechend in dem Gerät und/oder der Erfassungsvorrichtung selbst ausgebildet ist. Ein Smartphone, das beispielsweise als Gerät mit einem Bildschirm Teil des Erfassungssystems ist, hat häufig eine derartige Infrarotlichtquelle integriert, da diese beispielsweise dafür genutzt wird, die Kameravorrichtung des Smartphones mit der Autofokusfunktion auszustatten. Mithilfe des Erfassungssystems kann somit eine Autofokusfunktion bereitgestellt werden, die eine fokussierte Abbildung eines Objekts in der Umgebung mittels der Erfassungsvorrichtung ermöglicht.

In einer Ausgestaltungsform ist es vorgesehen, dass das Gerät eine Bildschirmseite und eine der Bildschirmseite gegenüberliegende Rückseite umfasst. Die Deckplatte ist nun gebogen ausgebildet, das heißt die Deckplatte kann zerstörungsfrei mit einem Biegeradius von kleiner als zwei Zentimetern verformt werden. Die Bildschirmseite und die Rückseite werden nun jeweils zumindest bereichsweise von der gebogenen Deckplatte abgedeckt. Hierdurch ist es beispielsweise möglich, dass sowohl auf einer Frontseite, die den Bildschirm umfasst, als auch auf der gegenüberliegenden Rückseite zum Beispiel des Smartphones jeweils die oben beschriebene Deckplatte angeordnet ist. Hierdurch kann beispielsweise ein auf der Rückseite des Smartphones positioniertes Objekt von der Bilderfassungseinrichtung erfasst werden, da das entsprechende Licht aus der Umgebung im Einkoppelbereich auf der Rückseite des Smartphones eingekoppelt, durch das Trägermedium übertragen und im Auskoppelbereich ausgekoppelt wird, sodass die Bilderfassungseinrichtung die mit dem erfassten Licht korrelierten Bilddaten erfassen und bereitstellen kann. Alternativ oder zusätzlich dazu kann die Deckplatte auch alle Außenseiten des Geräts bedecken, sodass Abbildungen der Umgebung von allen Seiten des Geräts möglich sind. Dies ist allerdings nur dann möglich, wenn sich der Einkoppelbereich über die gesamte Oberfläche der Deckplatte erstreckt und derart angeordnet ist, dass der Einkoppelbereich an der von dem Gerät weggewandten Seite der Deckplatte angeordnet ist.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung einer auf einem Bildschirm positionierten Erfassungsvorrichtung,
- Fig. 2a-2c: eine jeweilige schematische Darstellung eines jeweiligen Smartphones mit jeweils zumindest einer Bilderfassungseinrichtung, und
- Fig. 3: eine schematische Darstellung eines Smartphones, das auf einer Bildschirmseite und einer Rückseite von einer Deckplatte einer Erfassungsvorrichtung bedeckt ist.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

**In** den Figuren bezeichnen gleiche Bezugszeichen jeweils funktionsgleiche Elemente.

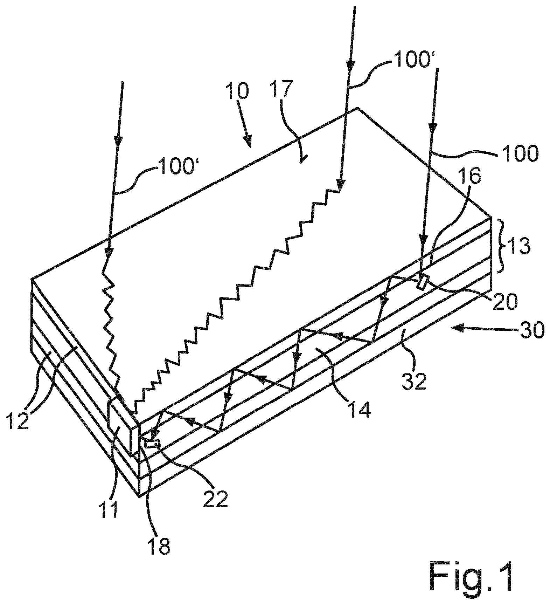

**In** Fig. 1 ist eine Erfassungsvorrichtung 10 skizziert, die eine Bilderfassungseinrichtung 11 sowie ein Trägermedium 12 umfasst. Das Trägermedium 12 ist hierbei als Lichtleiter ausgebildet und stellt einen Einkoppelbereich 16 sowie einen Auskoppelbereich 18 bereit. Das Trägermedium 12 ist zusammen mit dem Einkoppelbereich 16 und dem Auskoppelbereich 18 als eine Deckplatte 13 ausgebildet. Diese Deckplatte 13 ist dazu ausgelegt, auf einem Bildschirm 32, der nicht Teil der Erfassungsvorrichtung 10 ist, angeordnet zu sein. Hierbei bedeckt die Deckplatte 13 einen Anzeigebereich des Bildschirms 32. Der Einkoppelbereich 16 umfasst zumindest einen Teilbereich einer Oberfläche der Erfassungsvorrichtung 10, das heißt eine Deckplattenoberfläche 17 der Deckpatte 13. Dieser Teilbereich ist dazu ausgebildet, zumindest den Bildanzeigebereich des Bildschirms 32 abzudecken.

Der Einkoppelbereich 16 ist als holographisches Element 14 mit einer ersten Ablenkstruktur 20 ausgebildet. Die Ablenkstruktur 20 ist dazu ausgebildet, Licht 100, das aus einer Umgebung auf die erste Ablenkstruktur 20 fällt, in das Trägermedium 12 einzukoppeln. **In** diesem Beispiel ist das Licht 100 in Form von einem Lichtstrahl skizziert, der durch die Deckplattenoberfläche 17 hindurchtritt und von der ersten Ablenkstruktur 20 abgelenkt wird. Außerdem sind weitere Lichtstrahlen als Licht 100' skizziert, die ebenfalls auf den Einkoppelbereich 16 treffen. Das Trägermedium 12 ist dazu ausgebildet, das eingekoppelte Licht 100 mittels interner Reflexion von dem Einkoppelbereich 16 an den Auskoppelbereich 18 zu übertragen. Der Auskoppelbereich 18 ist als holographisches Element 14 mit einer zweiten Ablenkstruktur 22 ausgebildet. Die zweite Ablenkstruktur 22 ist dazu ausgelegt, das übertragene Licht 100, das auf die zweite Ablenkstruktur 22 fällt, aus dem Trägermedium 12 auszukoppeln.

Die Bilderfassungseinrichtung 11 ist hier an einer seitlichen Wand des Trägermediums 12, das heißt an einer seitlichen Wand der Deckplatte 13, angeordnet, wobei diese seitliche Wand senkrecht zum Einkoppelbereich 16 und somit zur Deckplattenoberfläche 17 angeordnet ist. Die Bilderfassungseinrichtung 11 ist dazu ausgebildet, das ausgekoppelte Licht 100 zu erfassen und in Form von Bilddaten, die mit dem erfassten Licht 100 korrelieren, bereitzustellen.

Es ist zu beachten, dass der Einkoppelbereich 16 und der Auskoppelbereich 18 als Ablenkstruktur 20, 22 zumindest ein optisches Gitter, insbesondere ein holographisches Volumengitter oder ein holographisches Oberflächengitter, aufweisen. Der Einkoppelbereich 16 und der Auskoppelbereich 18 können hierbei einstückig mit dem Trägermedium 12 ausgebildet sein. Alternativ dazu kann das Trägermedium 12 als separates Element zu dem Einkoppelbereich 16 und dem Auskoppelbereich 18 ausgebildet sein. Die Bilderfassungseinrichtung 11 zeichnet sich dadurch aus, dass sie eine Autofokusfunktion mittels einer Kantenkontrastmessung durchführen kann.

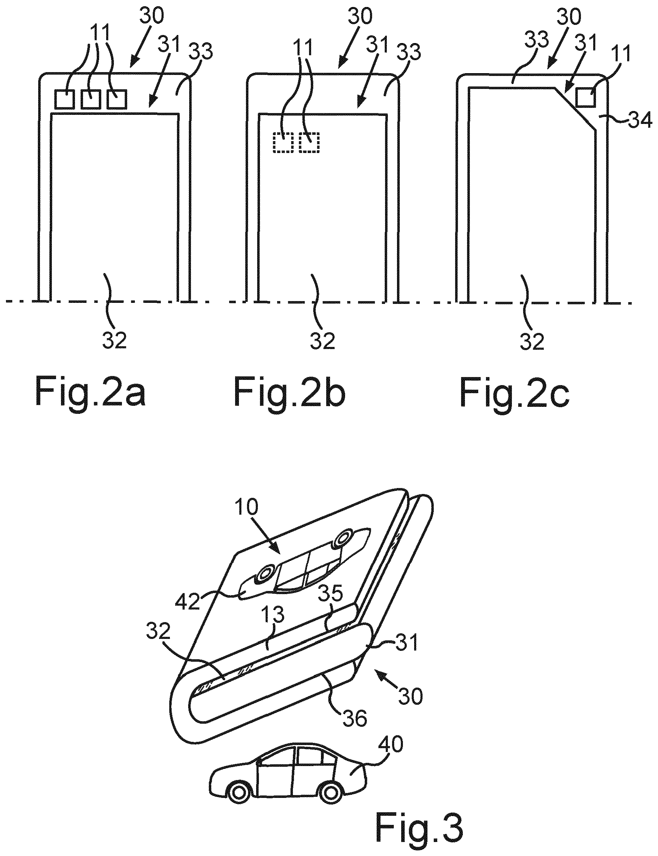

In Fig. 1 ist außerdem ein Erfassungssystem 30 skizziert. Das Erfassungssystem 30 umfasst die Erfassungsvorrichtung 10 sowie den Bildschirm 32 eines Geräts 31 (dargestellt mit dem Bezugszeichen 31 in Fig. 2). Bei diesem Gerät 31 handelt es sich beispielsweise um ein mobiles Endgerät, das heißt ein Smartphone, einen Computerbildschirm, ein Tablet und/oder einen Fernsehapparat. Die Erfassungsvorrichtung 10 stellt die Deckplatte 13 für den Bildschirm 32 dieses Geräts 31 bereit.

In den Fig. 2a bis 2c sind jeweils verschiedene Positionen zu sehen, an denen die Bilderfassungseinrichtung 11 positioniert sein kann. Die Fig. 2a bis 2c zeigen hierbei jeweils eine Frontseite eines Smartphones, das heißt die Frontseite des Geräts 31. Das Gerät 31 weist jeweils einen Bildschirm 32 auf, dessen Bildanzeigebereich von einem Rahmen 33 umgeben ist. Die Bilderfassungseinrichtung 11 kann nun beispielsweise, wie in Fig. 2a skizziert, in dem Rahmen 33 des Bildschirms 32 des Geräts 31 angeordnet sein. Hierbei können beispielsweise mehrere Bilderfassungseinrichtungen 11 vorgesehen sein, die jeweils beispielsweise dazu ausgelegt sind, Licht 100 eines bestimmten Wellenlängenbereichs von dem Auskoppelbereich 18 zu erfassen und in Form von entsprechenden Bilddaten bereitzustellen. Die Bilderfassungseinrichtung 11 umfasst in diesem Fall außerdem eine Auswerteeinrichtung, die nicht in den Fig. 2a bis 2c skizziert ist, die dazu ausgelegt ist, aus den von den mehreren Bilderfassungseinrichtungen 11 bereitgestellten Bilddaten Endbilddaten, die mit dem erfassten Licht 100 aus der Umgebung korrelieren, bereitzustellen und gegebenenfalls auf den Bildschirm 32 anzuzeigen. In Fig. 2b sind zwei Bilderfassungseinrichtungen 11 im Bildschirm 32 des Geräts 31 positioniert. In Fig. 2c ist eine exemplarische Bilderfassungseinrichtung 11 in einer Aussparung 34 des Rahmens 33 des Bildschirms 32 angeordnet. Der Einkoppelbereich 16 erstreckt sich in diesem Beispiel bevorzugt jeweils über die gesamte Deckplattenoberfläche der Deckplatte 13, das heißt des Bildschirms 32. Möchte nun beispielsweise ein Benutzer des Geräts 31 ein Foto von sich selbst machen, muss er nicht in eine der Bilderfassungseinrichtungen 11 blicken, sondern kann seinen Blick beispielsweise mittig auf den Bildschirm 32 richten. Dadurch wird erreicht, dass kein Parallaxe-Effekt für den Benutzer beim Aufnehmen eines Fotos von ihm selbst auftritt.

In Fig. 3 ist die Erfassungsvorrichtung 10 mit einer biegbaren Deckplatte 13 skizziert. Diese biegbare Deckplatte 13 ist derart ausgebildet, dass sie sowohl eine Bildschirmseite 35 des Bildschirms 32 des Geräts 31 bedeckt als auch eine Rückseite 36 des Geräts 31. Die Bildschirmseite 35 sowie die Rückseite 36 sind in diesem Beispiel jeweils zumindest teilweise von der Deckplatte 13 bedeckt. Befindet sind nun beispielsweise in der Umgebung der Rückseite 36 des Geräts 31 ein Spielzeugauto 40, kann dieses beschreibende Licht 100 vom Einkoppelbereich 16 auf der Rückseite 36 der Deckplatte 13 "erfasst" und mittels des Trägermediums 12 zum Auskoppelbereich 18 und zur Bilderfassungseinrichtung 11 geleitet werden, sodass letztendlich auf dem Bildschirm 32 eine Abbildung 42 des Spielzeugautos 40 angezeigt werden kann.

Die Erfassungsvorrichtung 10 und/oder das Gerät 31 umfassen zudem eine Lichtquelle, die dazu ausgelegt ist, ein vorgegebenes Lichtmuster in die Umgebung auszusenden. Die Bilderfassungseinrichtung 11 ist dazu ausgelegt, basierend auf dem erfassten und in der Umgebung reflektierten Lichtmuster eine Autofokusfunktion durchzuführen, wobei das von der Lichtquelle ausgehende Lichtmuster durch einen Lichtmustereinkoppelbereich, der beispielsweise dem Auskoppelbereich 18 entspricht, in das Trägermedium 12 eingekoppelt, mittels interner Reflexion durch das Trägermedium 12 geleitet und in einem Lichtmusterauskoppelbereich, der beispielsweise dem Einkoppelbereich 16 entspricht, in die Umgebung austritt.

Insgesamt zeigen die Beispiele, wie mit der Erfindung ein Mobiltelefondisplay mit unsichtbarer Aufnahmefunktion realisiert werden kann. Hierfür wird in die Deckplatte 13 des Geräts 31, bei dem es sich beispielsweise um ein Smartphone, das heißt um ein Mobiltelefon, handelt, eine sogenannte HoloCam verbaut. Es wird also ein holographisches Element 14 in die Deckplatte 13 integriert. Durch die Verwendung einer derartigen Deckplatte 13, die beispielsweise als Displayschutzglas ausgeformt ist, lässt sich die Bilderfassungseinrichtung 11 außerhalb des Bildanzeigebereichs des Bildschirms 32 anbringen und dabei gleichzeitig die Fläche des Bildschirms 32 zur Aufnahme nutzen. Dadurch entfallen störende Elemente im Bildanzeigebereich des Bildschirms 32, wie etwa die Aussparung 34, die auch als Notch bezeichnet werden kann, um dort beispielsweise einen Kamerasensor zu positionieren. Durch die Vergrößerung des Aufnahmebereichs über die gesamte Fläche des Einkoppelbereichs 16 ist eine Abschattung, zum Beispiel durch einen Finger des Benutzers, unwahrscheinlich. Zudem können optische Elemente typischer Kameravorrichtungen entfallen, wodurch Kosten, Gewicht und Komplexität der Vorrichtung reduziert werden können. Des Weiteren können diverse Funktionen abgebildet werden, wie zum Beispiel eine Entfernungsmessung über Kontrast, das heißt eine Kantenkontrastmessung, oder eine Structured Light Anwendung, das heißt eine Autofokussierung mithilfe von Lichtmustern. Hierfür wird eine herkömmliche Bildschirmoberfläche aus Glas durch die Deckplatte 13 ersetzt. Diese Deckplatte 13, die Teil der Erfassungsvorrichtung 10 ist, ermöglicht, das auf die Deckplattenoberfläche 17 auftreffendes Licht 100 zu einer außerhalb des Bildschirms 32 des Geräts 31 liegenden Bilderfassungseinrichtung 11 abzulenken und dort auszukoppeln.

## Patentansprüche

1. Erfassungssystem (30) umfassend eine Erfassungsvorrichtung (10) mit einer Bilderfassungseinrichtung (11) sowie einem Trägermedium (12), wobei das Trägermedium (12) als Lichtleiter ausgebildet ist, an dem ein Einkoppelbereich (16) und ein Auskoppelbereich (18) bereitgestellt sind, und das Trägermedium (12) mit dem Einkoppelbereich (16) und dem Auskoppelbereich (18) als eine Deckplatte (13) für einen Bildanzeigebereich eines Bildschirms (32) ausgebildet ist, wobei
- der Einkoppelbereich (16) zumindest einen Teilbereich einer Deckplattenoberfläche (17) der Deckplatte (13) umfasst, der zum Abdecken des Bildanzeigebereichs ausgebildet ist, wobei der Einkoppelbereich (16) als holografisches Element (14) mit einer ersten Ablenkstruktur (20) ausgebildet ist, die dazu ausgelegt ist, Licht (100), das aus einer Umgebung auf die erste Ablenkstruktur (20) fällt, in das Trägermedium (12) einzukoppeln;
- das Trägermedium (12) dazu ausgebildet ist, das eingekoppelte Licht (100) mittels interner Reflexion von dem Einkoppelbereich (16) an den Auskoppelbereich (18) zu übertragen;
- der Auskoppelbereich (18) als holografisches Element (14) mit einer zweiten Ablenkstruktur (22) ausgebildet ist, die dazu ausgelegt ist, das übertragene Licht (100), das auf die zweite Ablenkstruktur (22) fällt, aus dem Trägermedium (12) auszukoppeln; und
- die Bilderfassungseinrichtung (11) dazu ausgebildet ist, das ausgekoppelte Licht (100) zu erfassen und in Form von Bilddaten, die mit dem erfassten Licht (100) korrelieren, bereitzustellen,
sowie ein Gerät (31) mit einem Bildschirm (32), wobei die Erfassungsvorrichtung (10) eine Deckplatte (13) für den Bildschirm (32) des Geräts (31) bereitstellt,
**dadurch gekennzeichnet, dass**
die Erfassungsvorrichtung (10) und/oder das Gerät (31) eine Lichtquelle umfasst, die dazu ausgelegt ist, ein vorgegebenes Lichtmuster in die Umgebung auszusenden, und die Bilderfassungseinrichtung (11) dazu ausgelegt ist, basierend auf dem erfassten in der Umgebung reflektierten Lichtmuster eine Autofokusfunktion durchzuführen, wobei das von der Lichtquelle ausgesendete Lichtmuster durch einen Lichtmustereinkoppelbereich in das Trägermedium einkoppelt, mittels interner Reflexion durch das Trägermedium gelangt und an einem Lichtmusterauskoppelbereich in die Umgebung austritt.

2. Erfassungssystem (30) nach dem vorhergehenden Anspruch, wobei die Bilderfassungseinrichtung (11) der Erfassungsvorrichtung (10) an einer von folgenden Positionen angeordnet ist:
- in einem Rahmen (33) des Bildschirms (32) des Geräts (31);
- in einer Aussparung (34) in einem Randbereich des Bildschirms (32) des Geräts (31);
- an einer seitlichen Wand der Deckplatte (13), wobei die seitliche Wand senkrecht zum Einkoppelbereich (16) angeordnet ist;
- im Bildschirm (32) des Geräts (31).

3. Erfassungssystem (30) nach einem der vorhergehenden Ansprüche, wobei der Einkoppelbereich (16) und der Auskoppelbereich (18) als Ablenkstruktur (20, 22) zumindest ein optisches Gitter, insbesondere ein holografisches Volumengitter oder ein holografisches Oberflächengitter, aufweisen.

4. Erfassungssystem (30) nach einem der vorhergehenden Ansprüche, wobei der Einkoppelbereich (16) und der Auskoppelbereich (18) einstückig mit dem Trägermedium (12) ausgebildet sind oder das Trägermedium (12) als separates Element zu dem Einkoppelbereich (16) und dem Auskoppelbereich (18) ausgebildet ist.

5. Erfassungssystem (30) nach einem der vorhergehenden Ansprüche, wobei die Deckplatte (13) biegbar ausgebildet ist.

6. Erfassungssystem (30) nach einem der vorhergehenden Ansprüche, wobei die Bilderfassungseinrichtung (11) dazu ausgelegt ist, eine Autofokusfunktion mittels einer Kantenkontrastmessung durchzuführen.

7. Erfassungssystem (30) nach einem der vorhergehenden Ansprüche, wobei das Gerät (31) eine Bildschirmseite (35) und eine der Bildschirmseite (35) gegenüberliegende Rückseite (36) umfasst, wobei die Deckplatte (13) gebogen ausgebildet ist und die Bildschirmseite (35) und die Rückseite (36) jeweils ganz oder bereichsweise abdeckt.

## Claims

1. A capturing system (30) comprising a capturing device (10) with an image capturing device (11) as well as a carrier medium (12), wherein the carrier medium (12) is formed as a light guide, at which a coupling-in area (16) and a coupling-out area (18) are provided, and the carrier medium (12) with the coupling-in area (16) and the coupling-out area (18) is formed as a cover plate (13) for an image display area of a screen (32), wherein
- the coupling-in area (16) includes at least a partial area of a cover plate surface (17) of the cover plate (13), which is formed for covering the image display area, wherein the coupling-in area (16) is formed as a holographic element (14) with a first deflection structure (20), which is configured to couple light (100) incident on the first deflection structure (20) from an environment into the carrier medium (12);
- the carrier medium (12) is formed to transfer the coupled-in light (100) from the coupling-in area (16) to the coupling-out area (18) by means of internal reflection;
- the coupling-out area (18) is formed as a holographic element (14) with a second deflection structure (22), which is configured to couple the transferred light (100) incident on the second deflection structure (22) out of the carrier medium (12); and
- the image capturing device (11) is formed to capture the coupled-out light (100) and to provide it in the form of image data, which correlates with the captured light (100),
as well as an apparatus (31) with a screen (32), wherein the capturing device (10) provides a cover plate (13) for the screen (32) of the apparatus (31),
**characterized in that**
the capturing device (10) and/or the apparatus (31) includes a light source, which is configured to emit a preset light pattern into the environment, and the image capturing device (11) is configured to perform an autofocus function based on the captured light pattern reflected in the environment, wherein the light pattern emitted by the light source couples into the carrier medium by a light pattern coupling-in area, passes through the carrier medium by means of internal reflection and exits into the environment at a light pattern coupling-out area.

2. The capturing system (30) according to the preceding claim, wherein the image capturing device (11) of the capturing device (10) is arranged in one of the following positions:
- in a frame (33) of the screen (32) of the apparatus (31);
- in a recess (34) in an edge area of the screen (32) of the apparatus (31);
- at a lateral wall of the cover plate (13), wherein the lateral wall is arranged perpendicular to the coupling-in area (16);
- in the screen (32) of the apparatus (31).

3. The capturing system (30) according to any one of the preceding claims, wherein the coupling-in area (16) and the coupling-out area (18) comprise at least one optical grating, in particular a holographic volume grating or a holographic surface grating, as the deflection structure (20, 22).

4. The capturing system (30) according to any one of the preceding claims, wherein the coupling-in area (16) and the coupling-out area (18) are formed integrally with the carrier medium (12) or the carrier medium (12) is formed as a separate element to the coupling-in area (16) and the coupling-out area (18).

5. The capturing system (30) according to any one of the preceding claims, wherein the cover plate (13) is formed bendable.

6. The capturing system (30) according to any one of the preceding claims, wherein the image capturing device (11) is configured to perform an autofocus function by means of an edge contrast measurement.

7. The capturing system (30) according to any one of the preceding claims, wherein the apparatus (31) includes a screen side (35) and a rear side (36) opposing the screen side (35), wherein the cover plate (13) is formed bent and respectively covers the screen side (35) and the rear side (36) completely or in certain areas.

## Revendications

1. Système de détection (30) comprenant un dispositif de détection (10) ayant un dispositif de capture d'images (11) ainsi qu'un support (12), le support (12) étant mis en œuvre sous la forme d'un conduit de lumière sur lequel sont fournies une zone de couplage d'entrée (16) et une zone de couplage de sortie (18), et le support (12) avec la zone de couplage d'entrée (16) et la zone de couplage de sortie (18) étant mis en œuvre sous la forme d'une plaque de recouvrement (13) pour une zone d'affichage d'images d'un écran (32),
- la zone de couplage d'entrée (16) comprenant au moins une zone partielle d'une surface de plaque de recouvrement (17) de la plaque de recouvrement (13) conçue pour recouvrir la zone d'affichage d'images, la zone de couplage d'entrée (16) étant mise en œuvre sous la forme d'un élément holographique (14) avec une première structure de déviation (20) conçue pour coupler dans le support (12) de la lumière (100) provenant d'une zone environnante qui est incidente sur la première structure de déviation (20) ;
- le support (12) étant conçu pour transmettre la lumière couplée (100) de la zone de couplage d'entrée (16) à la zone de couplage de sortie (18) par réflexion interne ;
- la zone de couplage de sortie (18) étant réalisée sous la forme d'un élément holographique (14) avec une seconde structure de déviation (22) conçue pour coupler la lumière transmise (100) incidente sur la seconde structure de déviation (22) à l'extérieur du support (12) ; et
- le dispositif de capture d'images (11) étant conçu pour capturer la lumière (100) couplée en sortie et pour fournir des données d'image corrélées avec la lumière (100) détectée ;
ainsi qu'un appareil (31) muni un écran (32), le dispositif de détection (10) fournissant une plaque de recouvrement (13) pour l'écran (32) de l'appareil (31),
**caractérisé en ce que**
le dispositif de détection (10) et/ou l'appareil (31) comprend une source de lumière conçue pour émettre un modèle lumineux prédéterminé dans la zone environnante ; et le dispositif de capture d'images (11) est conçu pour exécuter une fonction de mise au point automatique sur la base du modèle lumineux réfléchi dans la zone environnante, le modèle lumineux émis par la source de lumière étant couplé dans le support par une zone de couplage d'entrée de modèle lumineux, parvenant par réflexion interne à travers le support et sortant dans la zone environnante au niveau d'une zone de couplage de sortie de modèle lumineux.

2. Système de détection (30) selon la revendication précédente, dans lequel le dispositif de capture d'images (11) du dispositif de détection (10) est agencé à l'une des positions suivantes :
- dans un encadrement (33) de l'écran (32) de l'appareil (31) ;
- dans un évidement (34) situé dans une zone de rebord de l'écran (32) de l'appareil (31) ;
- sur une paroi latérale de la plaque de recouvrement (13), la paroi latérale étant agencée perpendiculairement à la zone de couplage d'entrée (16) ;
- dans l'écran (32) de l'appareil (31).

3. Système de détection (30) selon l'une des revendications précédentes, dans lequel la zone de couplage d'entrée (16) et la zone de couplage de sortie (18) comportent en tant que structure de déviation (20, 22) au moins un réseau optique, en particulier un réseau holographique volumique ou un réseau holographique surfacique.

4. Système de détection (30) selon l'une des revendications précédentes, dans lequel la zone de couplage d'entrée (16) et la zone de couplage de sortie (18) sont mises en œuvre d'un seul tenant avec le support (12), ou le support (12) est formé comme un élément séparé de la zone de couplage d'entrée (16) et de la zone de couplage de sortie (18).

5. Système de détection (30) selon l'une des revendications précédentes, dans lequel la plaque de recouvrement (13) est réalisée de manière pliable.

6. Système de détection (30) selon l'une des revendications précédentes, dans lequel le dispositif de capture d'images (11) est conçu pour exécuter une fonction de mise au point automatique au moyen d'une mesure de contraste de bord.

7. Système de détection (30) selon l'une des revendications précédentes, dans lequel l'appareil (31) comprend un côté d'écran (35) et un côté arrière (36) opposé au côté d'écran (35), la plaque de recouvrement (13) étant formée pliée et recouvrant respectivement le côté d'écran (35) et le côté arrière (36) de manière complète ou dans certaines zones.
